# EUROPÄISCHE PATENTSCHRIFT

(11) **EP 0 638 347 B1**
(45) Veröffentlichungstag und Bekanntmachung des Hinweises auf die Patenterteilung: **28.05.1997**
(21) Anmeldenummer: 94111114.8
(22) Anmeldetag: 17.07.1994
(51) Int. Cl.: B01D 29/15, B01D 46/06

(54) **Filterelement**
Filter element
Elément de filtre

(30) Priorität: 05.08.1993 DE 4326341
(43) Veröffentlichungstag der Anmeldung: 15.02.1995
(73) Patentinhaber: JUNKER-FILTER GmbH, D-74889 Sinsheim (DE)
(72) Erfinder: Junker, Jürgen, D-74889 Sinsheim (DE)
(74) Vertreter: Ostertag, Reinhard

(56) Entgegenhaltungen:
- EP-A- 0 037 498
- DE-A- 1 948 774
- DE-A- 3 238 783
- DE-C- 642 113

## Beschreibung

Der Erfindung betrifft ein Filterelement zum Einbau in einen Behälter gemäß dem Oberbegriff des Anspruches 1.

Ein derartiges Filterelement ist in der DE-C-642 113 beschrieben. Es hat die Form einer Filterkerze, wobei die an beiden Kerzenenden vorgesehenen Anschlüsse es ermöglichen, das Abblasen des Filterkuchens durch Preßluftzufuhr sowohl zum unteren als auch zum oberen Abschnitt der Filterkerze auszuführen. Auf diese Weise wird die in der Kerze noch verbliebene Restflüssigkeitssäule druckausgeglichen gehalten. Der Anschluß am unteren Ende der Filterkerze kann zugleich zum Ablassen von Restfiltrat dienen.

Es sind ferner Filterelement zum Einbau in einen Behälter bekannt, bei denen eine Vielzahl paralleler von einem Filtermedium umgebener Filtratkanäle an ihrem einen Ende über einen Sammelkanal miteinander verbunden sind, der zum Abzug des Filtrats dient.

Bekannte derartige Filterelemente, wie sie derzeit zusammen mit Druckbehältern oder - bei Vakuumsystemen mit offenen Behältern - in Gebrauch sind, weisen nur an einem Ende der Filtratkanäle einen diese miteinander verbindenden Sammelkanal auf. Über diesen Sammelkanal werden verschiedene Funktionen durchgeführt: Im normalen Filtrierbetrieb wird hier das gewonnene Filtrat abgezogen; zum Lösen des auf den Filterelementen abgeschiedenen Filterkuchens erfolgt eine Rückspülung mit Druckluft, die über diesen einzigen Sammelkanal in umgekehrter Richtung zugeführt wird. Mit dieser Anordnung läßt sich jedoch den unterschiedlichen verfahrenstechnischen Bedingungen und Anforderungen, die bei Filtrationen auftreten können, nur unzureichend Rechnung tragen. In diesem Zusammenhang darf daran erinnert werden, daß bei Filtriervorgängen nicht nur die natürlich im Vordergrund stehende Abscheidung der Feststoffpartikel aus Suspensionen und die hiermit verbundene Kuchenbildung und die Abführung des Filtrates erforderlich sind. Zum Lösen des Kuchens muß darüber hinaus eine Rückspülung mit Flüssigkeit oder Druckluft möglich sein. Zur Erzielung reinerer Feststoffe wird häufig eine Wäsche des auf dem Filter abgeschiedenen Filterkuchens gewünscht. Soll dieser trocken gewonnen werden, muß der Filterkuchen in situ trockengeblasen werden, wozu unter anderem Luft, Stickstoff oder andere inerte Gase Verwendung finden. Der getrocknete Filterkuchen muß in geeigneter Weise so ausgetragen werden, daß er auch durch Filtrat, welches sich in den Filtratkanälen der Filterelemente angesammelt hat, nicht nachbefeuchtet wird.

Dieser Vielzahl von Anforderungen werden die bekannten Filterelemente mit einseitigem Sammelkanal nur unzureichend gerecht. Wird dieser beispielsweise oben vorgesehen, so bleibt bei Entleerung des Filterbehälters Restfiltrat im Inneren der Elemente vorhanden. Dieses innenliegende Filtrat läßt sich nicht oder nur unvollständig verdrängen.

Ordnet man dagegen den (einzigen) Sammelkanal unten an, so muß dieser klein gehalten werden, da sich sonst der Kuchen nicht vollständig aus dem Behälter austragen läßt und die Gefahr der sogenannten Brückenbildung sehr groß ist. Zwar ist im Gegensatz zum oben liegenden Sammelkanal eine Vollentleerung des Filtrates auch aus den Innenräumen der Filterelemente möglich. Eine Rückspülung mit Flüssigkeit oder mit Druckluft ist jedoch wegen des geringen Querschnittes des unten liegenden Sammelkanales nur wenig effektiv und führt nur bei leicht abtragbaren Kuchen und glatten dichten textilen Filtermedien zum Erfolg. Ein Waschen des Kuchens ist zwar möglich; Trockenblasen dagegen geht langsam und wenig effektiv.

Aus der DE-PS 32 38 783 ist ein Filter bekannt, bei welchem sich die mehreren Filtratkanäle in jeweils getrennten Filterkerzen befinden. Die Filterkerzen sind in vertikaler Ausrichtung nebeneinander in einer Trägerplatte montiert, welche den Innenraum des Behälters in einen Einlaßraum und einen Auslaßraum unterteilt. Die zu filtrierende Trübe wird unter Druck in den Einlaßraum gebracht, durchsetzt dann die Filterkerzen radial von außen nach innen, wobei sich auf dem Filtermedium der Filterkuchen bildet. Das Filtrat strömt in den Filtratkanälen der einzelnen Filterkerzen durch die Trägerplatte hindurch in den Auslaßraum und kann von dort abgezogen werden. Es bedarf keiner näheren Erläuterung, daß auch dieses bekannte Filter hinsichtlich der Verfahrenstechnologie erheblichen Einschränkungen unterworfen ist; es wird daher hauptsächlich bei der Eindickfiltration mit naßem Kuchenaustrag verwendet.

Aufgabe der vorliegenden Erfindung ist es, ein Filterelement der eingangs genannten Art so auszugestalten, daß es einer größeren Breite verfahrenstechnischer Anforderungen gerecht werden kann.

Diese Aufgabe wird erfindungsgemäß dadurch gelöst, daß die Filtratkanäle auch am anderen Ende über einen zweiten Sammelkanal miteinander verbunden sind.

Das erfindungsgemäße Filterelement eignet sich zur kuchenbildenden Filtration in allen Bereichen einschließlich der Feinstpartikelabscheidung, bei welcher dichte Multifil-Gewebe eingesetzt werden. Das Rückblasen zum Lösen des Filterkuchens folgt durch Druckluft, welche auf den zweiten, hierfür besonders ausgelegten Sammelkanal gegeben wird und das Filtermedium in umgekehrter Richtung durchtritt. Eine Entfernung des Filtrates ist restlos möglich; Trockenblasen des Filterkuchens und Waschen desselben lassen sich effektiver und schneller durchführen als beim Stande der Technik, da jeweils ein hierfür speziell ausgelegter Sammelkanal eingesetzt werden kann. In bestimmten Fällen kann der zusätzliche Sammelkanal auch zur Filtratabführung genutzt werden.

Bei einer besonders bevorzugten Ausführungsform der Erfindung weist der zweite Sammelkanal einen größeren Querschnitt auf als der erste Sammelkanal. Grund hierfür ist, daß über diesen zweiten Sammelkanal nicht nur flüssiges Filtrat sondern (beim Rückblasen oder Trocknen) Gase geführt werden, welchen der großflächige Sammelkanal geringeren Strömungswiderstand entgegensetzt.

Im allgemeinen werden die Filterelemente im Behälter so angeordnet, daß die Filtratkanäle im wesentlichen senkrecht verlaufen.

Für diesen Normalfall ist nach einem weiteren Merkmal der Erfindung vorgesehen, daß der größere zweite Sammelkanal oben und der erste Sammelkanal unten angeordnet ist.

Da der oben verlaufende Sammelkanal hinsichtlich des Kuchenaustrages keinerlei geometrischen Einschränkungen unterworfen ist, kann dieser großflächig ausgestaltet werden; der untere, im wesentlichen ausschließlich zum Filtrataustrag eingesetzte Sammelkanal dagegen erhält einen verhältnismäßig kleinen Querschnitt, der zur Flüssigkeitsführung jedoch ausreicht. Auf diese Weise wird die Ablösung des Kuchens vom Filtermedium und dessen Austrag aus dem Filter durch den unteren Sammelkanal nicht behindert.

Von Vorteil ist, wenn der obere Sammelkanal einen bezogen auf die Achse des Behälters radialen Anschlußstutzen aufweist. Der Anschlußstutzen setzt also diesen oberen Sammelkanal koaxial fort, was besonders kostengünstig ist.

Dagegen sollte der untere Sammelkanal einen bezogen auf die Achse des Behälters axialen Anschlußstutzen aufweisen. Der Grund ist darin zu sehen, daß ein derart gerichteter Anschlußstutzen den Austrag des Filterkuchens nicht behindert.

Zweckmäßigerweise ist das Filterelement aus zwei gegenüberliegenden, gefalteten Filtermedium-Bahnen zusammengesetzt.

Das Filterelement kann als "Einzelelement" gestaltet sein, also eine einzige komplette Einheit bilden.

Filterelemente werden jedoch häufig in den unterschiedlichsten Horizontalabmessungen benötigt, da sie im allgemeinen, parallel nebeneinander stehen, in einem runden Behälter angeordnet werden. Um nun die Herstellung derartiger unterschiedlich dimensionierter Filterelemente zu vereinfachen und kostengünstiger zu gestalten, ist bei einem bevorzugten Ausführungsbeispiel eines erfindungsgemäßen Filterlelementes vorgesehen, daß es modulartig aus einem oder mehreren identischen mittelständigen Bausteinen und zwei randständigen Bausteinen zusammengesetzt ist, wobei einer der randständigen Bausteine die Anschlußstutzen für die beiden Sammenkanäle aufweist. Unterschiedliche "Querabmessungen" von Filterelementen werden dann einfach dadurch erzielt, daß eine unterschiedliche Anzahl von mittelständigen, identischen Bausteinen zusammengefügt wird. Die einzelnen Bausteine können in großen Serien ohne Rücksicht auf die letztendlich angestrebten Abmessungen des Filterelementes hergestellt werden.

Zweckmäßigerweise ist die Anordnung dabei so, daß jeder Baustein einen Filtratkanal umfaßt.

Die Bausteine können lösbar aneinander befestigt sein.

In diesem Zusammenhang ist eine Anordnung von Vorteil, bei welcher die Bausteine durch Bolzen im Bereich der Sammelkanäle gegeneinander verspannt sind.

In jedem Filtratkanal kann ein Stützkörper mit Noppen und/oder Stegen angeordnet sein, auf welchen das Filtermedium als Strumpf oder Schlauch derart aufgezogen ist, daß es am Stützkörper punkt- oder linienhaft anliegt. Jeder Baustein ist auf diese Weise eine stabile, für sich handhabbare Einheit, die leicht mit anderen derartigen Bausteinen zum gesamten Filterelement vereinigt werden kann.

Die Bausteine sollten an den einander zugewandten Stirnseiten Dichtungseinrichtungen aufweisen, welche für einen dichten Übergang zwischen den in den einzelnen Bausteinen verlaufenden Abschnitten der beiden Sammelkanäle sorgen.

Besonders kostengünstig ist dabei eine Ausgestaltung, bei welcher die Dichtungseinrichtungen von einer Nut- und Federanordnung gebildet sind, die einstückig an die Bausteine angeformt ist.

Dabei kann jeder Baustein im Bereich seiner Feder eine geringere Härte als im übrigen Bereich aufweisen. Durch eine gewisse plastische oder elastische Verformung der Feder läßt sich so die Dichtwirkung weiter verbessern.

Ausführungsbelspiele der Erfindung werden nachfolgend anhand der Zeichnung näher erläutert; es zeigen
- Figur 1:: schematisch ein Filter im Axialschnitt;
- Figur 2:: in vergrößertem Maßstab einen Schnitt durch das beim Filter von Figur 1 eingesetzte Filterelement gemäß Line II-II von Figur 1 (Mittelbereich weggelassen);
- Figur 3:: in vergößertem Maßstab die Seitenansicht des Filterelementes aus Figur 1 im Bereich der Anschlüsse, teilweise geschnitten (Mittelbereich weggelassen);
- Figur 4:: einen Teilschnitt gemäß Linie IV-IV durch das Filterelement von Figur 1 in vergößertem Maßstab;
- Figur 5:: die Seitenansicht eines zweiten Ausführungsbeispieles eines Filterelementes mit modularem Aufbau (Mittelbereich weggelassen);
- Figur 6:: einen Schnitt gemäß Linie VI-VI von Figur 5;
- Figur 7:: die Daraufsicht auf das Filterelement der Figuren 5 und 6, teilweise aufgebrochen und im Schnitt unter vergrößertem Maßstab;
- Figur 8:: in vergrößertem Maßstab im Schnitt ein Detail der Wandung des unteren Sammelkanales des in den Figuren 5 bis 7 dargestellten Filterelementes.

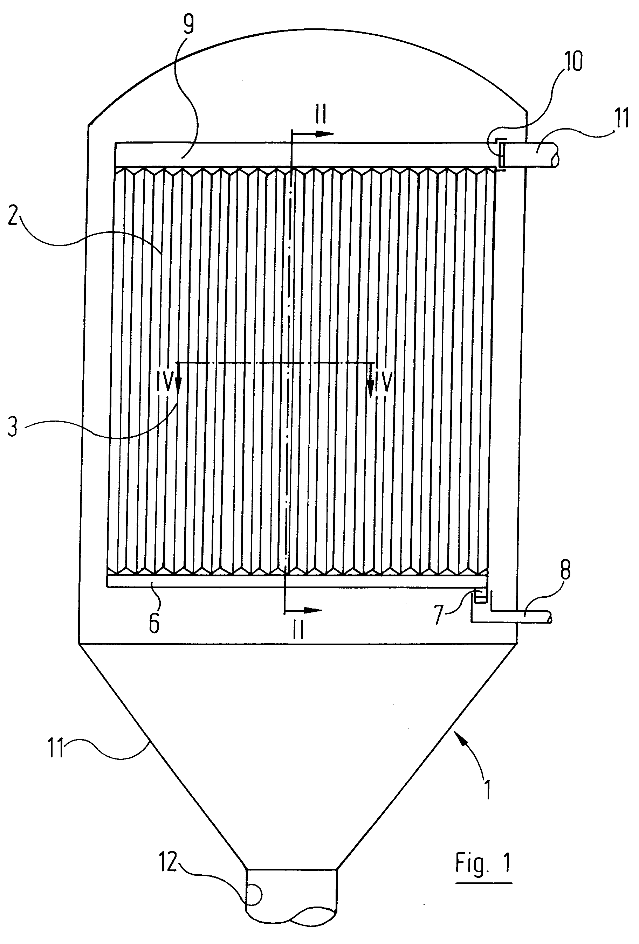

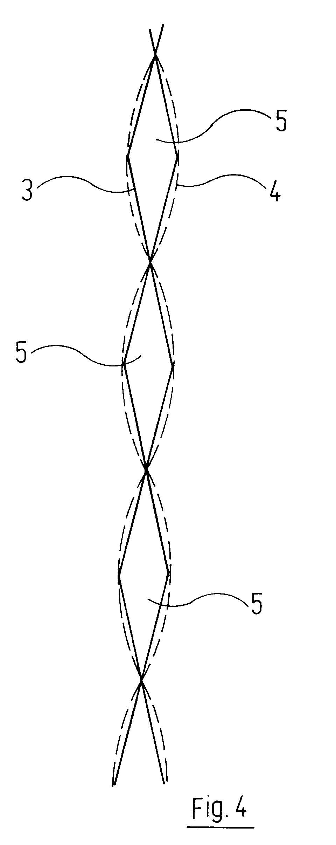

Das in Figur 1 im Axialschnitt dargestellte Filter umfaßt einen Behälter 1, in welchem mehrere plattenartige Filterelemente 2 (nur eines in der Zeichnung erkennbar) nebeneinander angeordnet sind. Das Filterelement 2 seinerseits ist aus zwei Filtermedium-Bahnen 3,4 zusammengesetzt, die, wie insbesondere der Figur 4 zu entnehmen ist, so gefalter und in regelmäßigen Abständen miteinander verbunden sind, daß sich eine Vielzahl paralleler in Figur 1 von oben nach unten verlaufender Filtratkanäle 5 ergibt. Als Filtermedium eignen sich sowohl Metallgewebe als auch Kunststoffgewebe; letztere können aus Monfil oder Multifil bestehen. Die Filtermedien können darüber hinaus aus Stapelfasergarn, Nadelfilzen oder Kombinationen aller gängiger Faserarten hergestellt sein. Sie sind flexibel, so daß sie sich aus der in Figur 4 in durchgezogenen Linien dargestellten Konfiguration, in welcher der normale Filtriervorgang stattfindet, in die gestrichelt dargestellte Konfiguration aufblasen können, wenn die Filtratkanäle 5 mit Druck beaufschlagt werden.

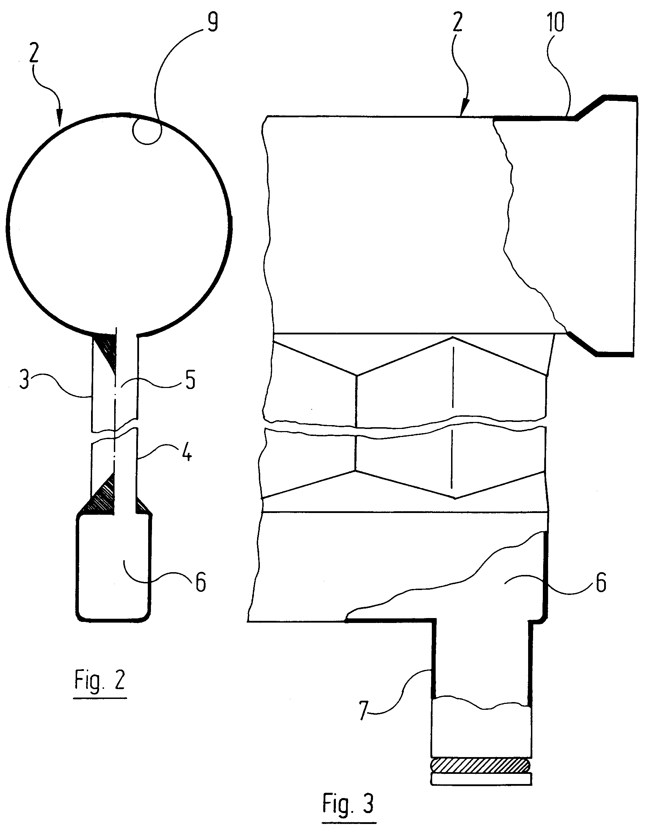

Die Filtratkanäle 5 des Filterelementes 2 münden unten in einen quer, in Figur 1 also horizontal, verlaufenden Sammelkanal 6. Der Sammelkanal 6 hat beispielsweise, wie der Figur 2 zu entnehmen ist, die Querschnittsform eines verhältnismäßig schmalen, hochkant stehenden Rechtecks. Am in Figur 1 rechten Ende ist der Sammelkanal 6 mit einem rechtwinklig nach unten abgehenden Anschlußstutzen 7 versehen, der mit einer Abzugsleitung 8 für das Filtrat verbunden ist. Der Anschlußstutzen 7 ist in der unteren Hälfte der Figur 3 in vergrößertem Maßstab dargestellt.

Die verschiedenen Filtratkanäle 5 münden an ihrer Oberseite in einen zweiten Sammelkanal 9, der an einer Seite einen Anschlußstutzen 10 aufweist. Der Anschlußstutzen 10 setzt den Sammelkanal 9 koaxial fort, ist also bezogen auf den Behälter 2 radial angeordnet. Der Anschlußstutzen 10, der in der oberen Hälfte der Figur 3 in vergrößertem Maßstab dargestellt ist, ist mit einer Leitung 11 verbunden, deren Sinn aus der weiteren Beschreibung deutlich werden wird.

Wie der Figur 2 zu entnehmen ist, weist der obere Sammelkanal 9 des dargestellten Ausführungsbeispiels einen kreisförmigen Querschnitt auf. Die Querschnittsfläche des Sammelkanales 9 ist größer als diejenige des unteren Sammelkanales 6; die Gründe hierfür werden ebenfalls weiter unten deutlich werden.

In normalen Filtrierbetrieb arbeitet der in Figur 1 dargestellte Filter mit dem in den Figuren 2 bis 4 dargestellten Filterelement 2 wie folgt:

Die mit Feststoffpartikeln versehene Trübe wird über einen nicht dargestellten Einlaß in den Behälter 1 eingegeben. Bei Überdruck erfolgt die Krafteinleitung von außen, bei Unterdruck von innen. Das Filtrat durchsetzt die Filtermedien 3 und 4 und tritt in die Filtratkanäle 5 ein, wobei die Feststoffpartikel auf den Außenflächen der Filtermedien 3 und 4 als Filterkuchen zurückbleiben. Das Filtrat gelangt aus den einzelnen, parallelen Filtratkanälen 5 in den unteren Sammelkanal 6 und wird dann über den unteren Anschlußstutzen 7 und die Abzugsleitung 8 abgeführt.

Zum Entfernen des auf den Filtermedien 3 und 4 abgeschiedenen Filterkuchens wird auf den oberen Sammelkanal 9 Druckluft gegeben. Diese tritt von oben her in die einzelnen Filtratkanäle 5 ein und bläst explosionsartig die Filtermedien 3 und 4 aus der in Figur 4 durchgezogen dargestellten gefaltenen Konfiguration in die in Figur 4 gestrichelt dargestellte Konfiguration auf. Aufgrund des großen Querschnittes des oberen Sammelkanales 9 kann dieses Aufblasen sehr rasch erfolgen, auch bei den abscheideaktivsten, dichtesten Multifilgeweben oder bei sogenannten rißbildenden Kuchensystemen. Der Filterkuchen löst sich bei diesem Aufblasen von den Oberflächen der Filtermedien 3, 4 ab und fällt in den trichterförmigen unteren Bereich 11 des Behälters 1, von wo er über eine verhältnismäßig großflächig untere Öffnung 12 abgezogen werden kann.

Der obere Sammelkanal 9 läßt sich jedoch nicht nur vorteilhaft zum Rückspülen einsetzen. Bei Bedarf kann er auch dazu verwendet werden, das Filtrat nach oben abzuführen, was je nach den speziellen Einsatzbedingungen des Filters zweckmäßig sein kann.

Soll der Filterkuchen auf den Filtermedien 3 und 4 getrocknet werden, so wird in den Behälter 1 Luft, Stickstoff oder Dampf eingeführt oder es wird Luft oder Gas mittels Vauum durch den Kuchen gesaugt. Diese trocknenden Gase oder Dämpfe durchtreten dann in Filtrationsrichtung die Filtermedien 3, 4 und werden über die Filtratkanäle 5 und den oberen Sammelkanal 9 abgeführt wird. Da dieser verhältnismäß großen Querschnitt aufweist, kann die Trocknung effektiver und schneller als bei bekannten Filterelementen geschehen, wobei gleichzeitig Filtrat oder Kondensat nach unten in den unteren Sammelkanal abgeführt wird.

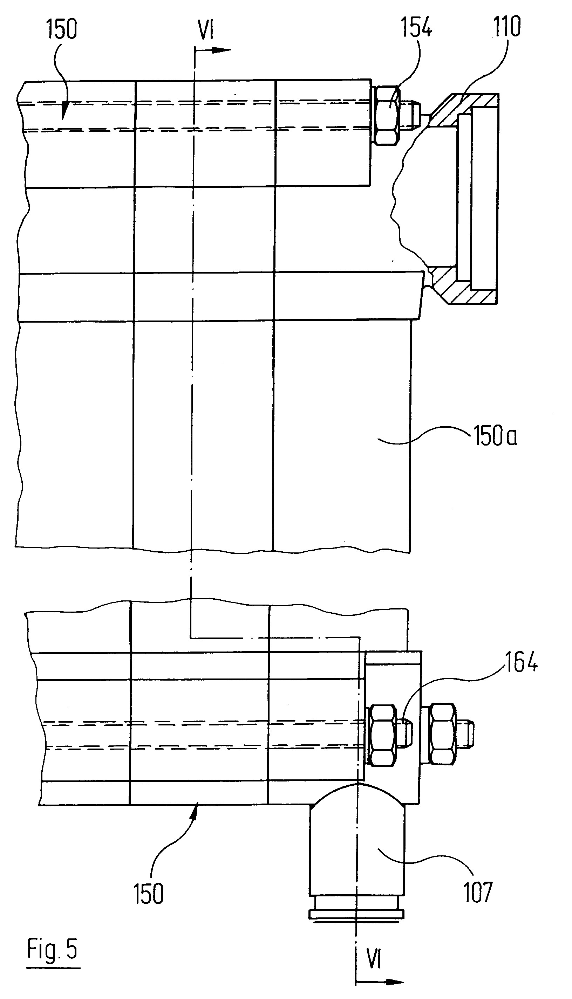

Wie bereits oben erwähnt, sind in dem Behälter 1 im allgemeinen mehrere Filterelemente 2 nebeneinander angeordnet. Aufgrund der im Querschnitt runden Form des Behälters 1, die normalerweise aus statischen Gründen gewählt wird, haben die verschiedenen Filterelemente unterschiedliche Abmessungen. Um die Herstellung deratiger unterschiedlich dimensionierter Filterelemente zu vereinfachen, kann es sich empfehlen, die Filterelemente modular aufzubauen. Ein Beispiel für eine derartiges, modulares Filterelement ist in den Figuren 5 bis 9 dargestellt. Der Aufbau dieses zweiten Ausführungsbeispieles eines Filterelementes entspricht weitgehend demjenigen, welches oben anhand der Figuren 1 bis 4 erläutert wurde; entsprechende Teile sind daher mit demselben Bezugszeichen zuzüglich 100 gekennzeichnet.

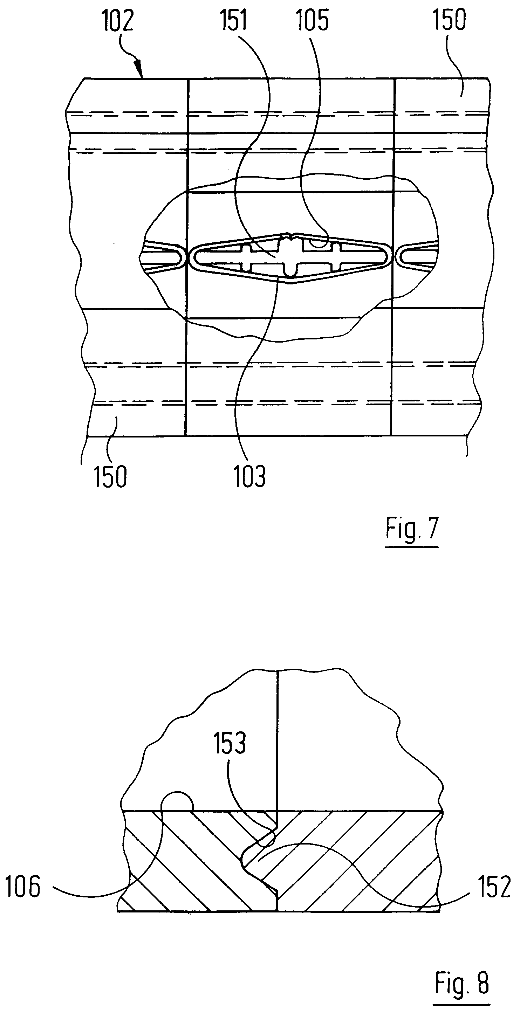

Wie insbesondere der Figur 5 zu entnehmen ist, weist das modular aufgebaute Filterelement 102 im mittleren Bereich identische Bausteine 150 auf. Jeder dieser Bausteine 150 umfaßt einen oberen Sammelkanal 109 und einen unteren Sammelkanal 106, die über einen Filtratkanal 105 (vergleiche auch Figur 7) miteinander verbunden sind. In jeden Filtratkanal 105 befindet sich ein starrer Stützkörper 151 (Figur 7), über den ein Filterstrumpf 103 gezogen ist.

Eine Vielzahl derartiger Bausteine 150 ist im Mittelbereich des Filterelementes 102 derart aneinandergelegt, daß sich die in jedem Baustein 150 vorgesehenen Abschnitte des oberen Sammelkanales 109 und des unteren Sammelkanales 106 koaxial aneinanderfügen und so Sammelkanäle für das gesamte Filterelement 102 bilden. Die Wände des Sammelkanäle greifen zur besseren Abdichtung, wie in Figur 8 gezeigt, nach Art von Nut 153 und Feder 152 ineinander. Die Abdichtung wird besonders zuverläßig, wenn als Material für die Sammelkanäle 109 und 107 ein Kunststoff mit einer gewissen Weichheit und Nachgiebigkeit verwendet wird. Alternativ ist es auch möglich, zwischen den einzelnen Bauelementen 150 zur Abdichtung der Sammelkanäle 109 und 106 an den Stoßstellen geeignete Dichtungen einzufügen.

An den beiden Längsseiten (welche bezogen auf den Druckbehälter achsparallel verlaufen) sind Abschluß-Bausteine 150a vorgesehen. In Figur 5 ist nur der rechte dieser Abschlußbausteine 150a dargestellt, an welchem die Anschlußstutzen 107 und 110 ausgebildet sind. Der zugehörige zweite Abschlußbaustein 150a enthält statt Durchgangsbohrungen für die Sammelkanäle 109 und 106 Blindbohrungen, unterscheidet sich aber sonst nicht von einem mittelständigen Baustein 150.

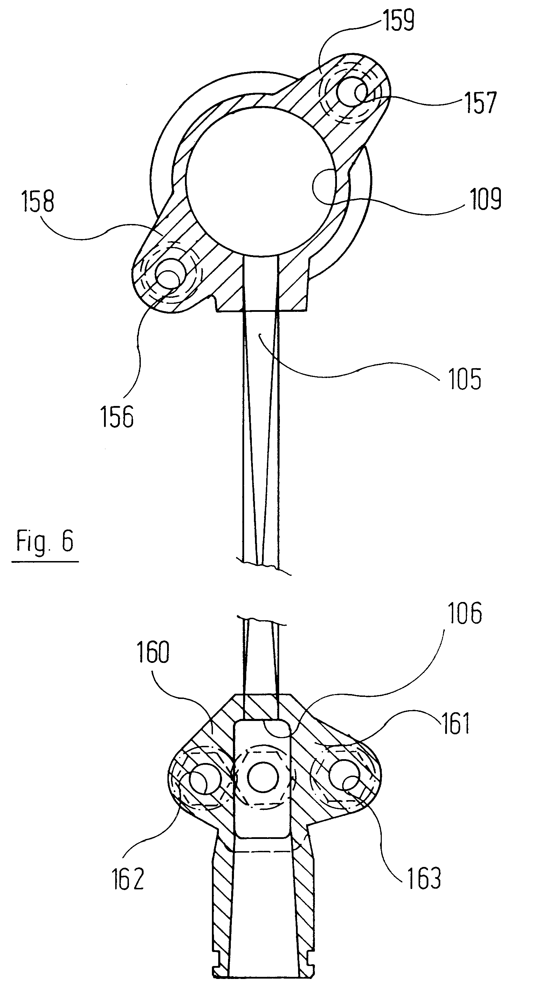

Alle Bausteine 150, 150a des Filterelementes 102 werden durch Bolzen miteinander verspannt. Wie insbesondere der Figur 6 zu entnehmen ist, verlaufen zwei dieser Bolzen 154 und 155 durch zwei Bohrungen 156, 157, die parallel zum oberen Sammelkanal 109 durch das Material geführt sind, welches von an den Sammelkanal 109 angeformten Augen 158, 159 bereitgestellt wird.

In entsprechender Weise sind die einzelnen Bausteine 150, 150a im Bereich des unteren Sammelkanales 106 miteinander verbunden. Wiederum sind an den unter Sammelkanal 106 seitliche Augen 160, 161 angeformt. Durch das von diesen bereitgestellte Material verlaufen zwei parallele Bohrungen 162, 163. Durch die Bohrungen 162 und 163 sind Bolzen 164, 165 hindurchgeführt, auf welche von außen her Muttern zum gegenseitigen Verspannen der Bausteine 150 aufgedreht sind.

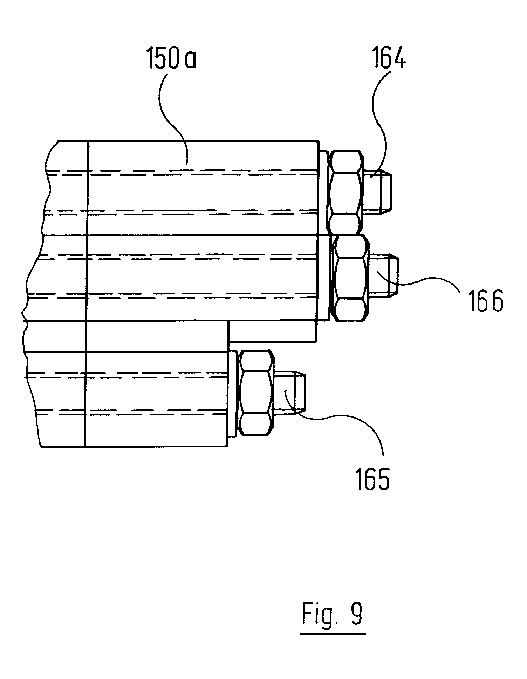

In den Figuren 6 und 9 ist außerdem ein Bolzen 166 dargestellt, welcher durch den unteren Sammelkanal 106 hindurch und beidseits dicht aus diesem ausgeführt ist. Ein solcher Bolzen 166 ist als Alternative für die Befestigungsart mit zwei seitlichen Bolzen 164 und 165 gedacht. Normalerweise ist also bei einem bestimmten Ausführungsbeispiel des Filterelementes 102 entweder ein einziger, durch den unteren Sammelkanal 106 hindurchgeführter Bolzen 166 oder zwei seitliche, durch gesonderte Bohrungen 162 und 163 durchgeführte Bolzen 164 und 165 vorgesehen. Beide Arten der Verspannung sind zur Verringerung der Figurenzahl in den Figuren 6 und 9 zusammengezeichnet.

Ersichtlich ist es bei der in den Figuren 5 bis 9 dargestellten modularen Bauweise eines Filterelementes 102 möglich, durch Verwendung von standardisierten Bausteinen 150 und 150a Filterelemente unterschiedlichster Dimensionen herzustellen: je nach der Anzahl der mittelständigen Bausteine 150 ergibt sich eine unterschiedliche Querabmessung des Filterelementes 102.

Die Funktionsweise des Ausführungsbeispieles nach den Figuren 5 bis 9 stimmt mit derjenigen vollständig überein, die oben für das Ausführungsbeispiel nach den Figuren 1 bis 4 beschrieben wurde.

## Patentansprüche

1. Plattenförmiges Filterelement (2) zum Einbau in einen Behälter (1), welches einen von einem Filtermedium (3, 4) umgebenen Filtratkanal (5) aufweist, der an seinen Enden jeweils mit einem zugeordneten Sammelkanal (6) verbunden ist, dadurch gekennzeichnet, daß der Filtratkanal (5) zu einer Vielzahl paralleler von einem Filtermedium (3, 4) umgebener Filtratkanäle (5; 105) gehört, die in dem plattenartigen Filterelement (2) ausgebildet sind und daß in dem plattenartigen Filterelement (2) ein die einen Enden der Filtratkanäle (5) verbindender erster Sammelkanal (6; 106) und ein die zweiten Enden der Filtratkanäle (5) verbindender zweiter Sammelkanal (9; 109) vorgesehen ist.

2. Filterelement nach Anspruch 1, dadurch gekennzeichnet, daß der zweite Sammelkanal (9; 109) einen größeren Querschnitt aufweist als der erste Sammelkanal (6; 106).

3. Filterelement nach Anspruch 2, bei welchem die Filtratkanäle (5) im wesentlichen senkrecht verlaufen, dadurch gekennzeichnet, daß der größere zweite Sammelkanal (9; 109) oben und der erste Sammelkanal (6; 106) unten angeordnet ist.

4. Filterelement nach Anspruch 3, dadurch gekennzeichnet, daß der obere Sammelkanal (9; 109) einen bezogen auf die Achse des Behälters (1) radialen Anschlußstutzen (10; 110) aufweist.

5. Filterelement nach Anspruch 3 oder 4, dadurch gekennzeichnet, daß der untere Sammelkanal (6; 106) einen bezogen auf die Achse des Behälters (1) axialen Anschlußstutzen (7; 107) aufweist.

6. Filterelement nach einem der Ansprüche 1 bis 5, dadurch gekennzeichnet, daß es aus zwei gegenüberliegenden, gefalteten Filtermedium-Bahnen (3, 4) zusammengesetzt ist.

7. Filterelement nach einem der Ansprüche 1 bis 6, dadurch gekennezichnet, daß es als Einzelelement gestaltet ist.

8. Filterelement nach einem der Ansprüche 1 bis 6, dadurch gekennzeichnet, daß es modulartig aus einem oder mehreren identischen mittelständigen Bausteinen (150) und zwei randständigen Bausteinen (150a) zusammengesetzt ist, wobei einer der randständigen Bausteine (150a) die Anschlußstutzen (107, 110) für die beiden Sammelkanäle (106, 109) aufweist.

9. Filterelement nach Anspruch 8, dadurch gekennzeichnet, daß jeder Baustein (150, 150a) einen Filtratkanal (105) umfaßt.

10. Filterelement nach Anspruch 8 oder 9, dadurch gekennzeichnet, daß die Bausteine (150, 150a) lösbar aneinander befestigt sind.

11. Filterelement nach Anspruch 10, dadurch gekennzeichnet, daß die Bausteine (150, 150a) durch Bolzen (154, 155, 164, 165, 166) im Bereich der Sammelkanäle (106, 109) gegeneinander verspannt sind.

12. Filterelement nach einem der vorhergehenden Ansprüche, dadurch gekennzeichnet, daß in jedem Filtratkanal (105) ein Stützkörper (151) mit Noppen und/oder Stegen angeordnet ist, auf welchen das Filtermedium (103) als Strumpf oder Schlauch derart aufgezogen ist, daß es am Stützkörper (151) punkt- oder linienhaft anliegt.

13. Filterelement nach einem der Ansprüche 8 bis 12, dadurch gekennzeichnet, daß die Bausteine (150, 150a) an den einander zugewandten Stirnseiten Dichtungseinrichtungen (152, 153) aufweisen, welche für einen dichten Übergang zwischen den in den einzelnen Bausteinen (150, 150a) verlaufenden Abschnitten der beiden Sammelkanäle (106, 109) sorgen.

14. Filterelement nach Anspruch 13, dadurch gekennzeichnet, daß die Dichtungseinrichtungen von einer Nut (153) - und Feder (152) - Anordnung gebildet sind, die einstückig an die Bausteine (150, 150a) angeformt ist.

15. Filterelement nach Anspruch 14, dadurch gekennzeichnet, daß jeder Baustein (150, 150a) im Bereich seiner Feder (152) eine geringere Härte als im übrigen Bereich aufweist.

## Claims

1. Plate-shaped filter element (2) for installation in a container (1), which element has a filtrate duct (5) which is surrounded by a filter medium (3, 4) and connected at its ends, in each case, to an associated collecting duct (6) characterized in that the filtrate duct (5) belongs to a plurality of parallel filtrate ducts (5; 105) which are surrounded by a filter medium (3, 4) and constructed in the plate-like filter element (2), and that there are provided, in the plate-like filter element (2), a first collecting duct (6; 106) which connects the first ends of the filtrate ducts (5), and a second collecting duct (9; 109) which connects the second ends of the filtrate ducts (5).

2. Filter element according to Claim 1, characterized in that the second collecting duct (9; 109) has a larger cross-section than the first collecting duct 6; 106).

3. Filter element according to Claim 2, wherein the filtrate ducts (5) extend substantially vertically, characterized in that the larger, second collecting duct (9; 109) is disposed at the top and the first collecting duct (6; 106) at the bottom.

4. Filter element according to Claim 3, characterized in that the upper collecting duct (9; 109) has a pipe union (10; 110) which is radial in relation to the axis of the container (1).

5. Filter element according to claim 3 or 4, characterized in that the lower collecting duct (6; 106) has a pipe union (7; 107) which is axial in relation to the axis of the container (1).

6. Filter element according to one of Claims 1 to 5, characterized in that it is made up of two folded webs (3, 4) of filter medium which are located opposite each other.

7. Filter element according to one of claims 1 to 6, characterized in that it is constructed as a single element.

8. Filter element according to one of Claims 1 to 6, characterized in that it is made up, in a modular manner, of one or more identical, centrally located modules (150) and two marginally located modules (150a), with one of the marginally located modules (150a) having the pipe unions (107, 110) for the two collecting ducts (106, 109).

9. Filter element according to Claim 8, characterized in that each module (150, 150a) comprises one filtrate duct (105).

10. Filter element according to Claim 8 or 9,
characterized in that the modules (150, 150a) are fastened to each other in a detachable manner.

11. Filter element according to Claim 10, characterized in that the modules (150, 150a) are braced against each another by bolts (154, 155, 164, 165, 166) in the region of the collecting ducts (106, 109).

12. Filter element according to one of the preceding Claims, characterized in that, in each filtrate duct (105) there is disposed a supporting body (151) with knobs and/or cross-pieces, onto which body the filter medium (103) is drawn, in the form of a stocking or tube, in such a way that it bears against the supporting body (151) with punctiform or linear contact.

13. Filter element according to one of Claims 8 to 12, characterized in that the modules (150, 150a) have, on the end faces which are turned towards each other, sealing devices (152, 153) which ensure an impermeable transition between those sections of the two collecting ducts (106, 109) which extend within the individual modules (150, 150a).

14. Filter element according to Claim 13, characterized in that the sealing devices are formed by a groove (153) and tongue (152) arrangement which is moulded onto the modules (150, 150a) in one piece.

15. Filter element according to Claim 14, characterized in that each module (150, 150a) has a lower degree of hardness in the region of its tongue (152) than elsewhere.

## Revendications

1. Elément filtrant (2) en forme de plaque à monter dans un récipient (1), élément qui présente un canal de filtrat (5) entouré par un agent filtrant (3, 4) et relié, à chacune de ses extrémités, à un canal collecteur associé (6), **caractérisé** en ce que le canal de filtrat (5) fait partie d'une pluralité de canaux de filtrat parallèles (5 ; 105) entourés par un agent filtrant (3, 4), qui sont configurés dans l'élément filtrant (2) du genre plaque, et en ce que sont prévus, dans l'élément filtrant (2) du genre plaque, un premier canal collecteur (6 ; 106) reliant les premières extrémités des canaux de filtrat (5) et un deuxième canal collecteur (9 ; 109) reliant les deuxièmes extrémités des canaux de filtrat (5).

2. Elément filtrant selon la revendication 1, **caractérisé** en ce que le deuxième canal collecteur (9 ; 109) présente une plus grande section que le premier canal collecteur (6 ; 106).

3. Elément filtrant selon la revendication 2, dans lequel les canaux de filtrat (5) s'étendent sensiblement verticalement, **caractérisé** en ce que le deuxième canal collecteur (9 ; 109), plus gros, est disposé en haut, et le premier canal collecteur (6 ; 106) en bas.

4. Elément filtrant selon la revendication 3, **caractérisé** en ce que le canal collecteur supérieur (9 ; 109) présente un piquage de branchement (10 ; 110) radial par rapport à l'axe du récipient (1).

5. Elément filtrant selon la revendication 3 ou 4, **caractérisé** en ce que le canal collecteur inférieur (6 ; 106) présente un piquage de branchement (7 ; 107) axial par rapport à l'axe du récipient (1).

6. Elément filtrant selon une des revendications 1 à 5, **caractérisé** en ce qu'il est composé de deux bandes (3, 4) d'agent filtrant pliées en vis-a-vis.

7. Elément filtrant selon une des revendications 1 à 6, **caractérisé** en ce qu'il est réalisé sous la forme d'un unique élément.

8. Elément filtrant selon une des revendications 1 à 6, **caractérisé** en ce qu'il présente une structure modulaire avec un ou plusieurs modules centraux identiques (150) et deux modules périphériques (150a), un des modules périphériques (150a) présentant les piquages de branchement (107, 110) pour les deux canaux collecteurs (106, 109).

9. Elément filtrant selon la revendication 8, **caractérisé** en ce que chaque module (150, 150a) comprend un canal de filtrat (105).

10. Elément filtrant selon la revendication 8 ou 9, **caractérisé** en ce que les modules (150, 150a) sont fixés de manière amovible les uns aux autres.

11. Elément filtrant selon la revendication 10, **caractérisé** en ce que les modules (150, 150a) sont assemblés avec serrage les uns aux autres par des boulons (154, 155, 164, 165, 166) dans la région des canaux collecteurs (106, 109).

12. Elément filtrant selon une des revendications précédentes, **caractérisé** en ce qu'un corps de soutien (151) pourvu de nopes et/ou de nervures est disposé dans chaque canal de filtrat (105), corps sur lequel l'agent filtrant (105) est emmanché sous forme de manchon ou de gaine de telle sorte qu'il s'applique en adhérence ponctuelle ou linéaire sur le corps de soutien (151).

13. Elément filtrant selon une des revendications 8 à 12, **caractérisé** en ce que les modules (150, 150a) présentent, sur les côtés frontaux en vis-à-vis, des moyens d'étanchement (152, 153) qui assurent une transition étanche entre les parties des deux canaux collecteurs (106, 109) qui s'étendent dans les modules individuels (150, 150a).

14. Elément filtrant selon la revendication 13, **caractérisé** en ce que les moyens d'étanchement sont formés par un agencement à rainure (153) et languette (152), qui est formé d'un seul tenant sur les modules (150, 150a).

15. Elément filtrant selon la revendication 14, **caractérisé** en ce que chaque module (150, 150a) présente une dureté moindre dans la région de sa languette (152) que dans le reste du module.
